# EUROPEAN PATENT SPECIFICATION

(11) **EP 3 001 735 B1**
(45) Date of publication and mention of the grant of the patent: **07.06.2017**
(21) Application number: 13887895.4
(22) Date of filing: 27.06.2013
(51) Int. Cl.: H04W 48/18

(54) **SERVICE OFFLOADING METHOD AND BASE STATION**
DIENSTABLADEVERFAHREN UND BASISSTATION
PROCÉDÉ DE DÉLESTAGE DE SERVICE ET STATION DE BASE

(43) Date of publication of application: 30.03.2016
(73) Proprietor: Huawei Technologies Co., Ltd., Longgang District Shenzhen, Guangdong 518129 (CN)
(72) Inventor: LIU, Hai, Shenzhen Guangdong 518129 (CN); YU, Yijun, Shenzhen Guangdong 518129 (CN)
(74) Representative: Körber, Martin Hans
(86) International application number: PCT/CN2013/078116
(87) International publication number: WO 2014/205713

(56) References cited:
- WO-A1-2013/063984
- CN-A- 102 273 279
- CN-A- 102 892 143
- CN-A- 102 970 713
- US-A1- 2010 323 698
- "3rd Generation Partnership Project; Technical Specification Group Radio Access Network; Study on WLAN/3GPP Radio Interworking (Release 12)", 3GPP DRAFT; R2-132240_021_ FS_UTRA_LTE_WLAN_INTERW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 2 June 2013 (2013-06-02), XP050698627, Retrieved from the Internet: URL:http://www.3gpp.org/ftp/tsg_ran/WG2_RL 2/R2_TSs_TRs_early_versions/TR37.834_WLAN_ interw/v0.2.1/ [retrieved on 2013-06-02]
- QUALCOMM INCORPORATED ET AL: "Text proposal on WLAN/3GPP radio Interworking solution 3", 3GPP DRAFT; R2-132194_TEXT PROPOSAL ON WLAN-3GPP RADIO INTERWORKING SOLUTION 3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Fukuoka, Japan; 20130520 - 20130524 24 May 2013 (2013-05-24), XP050700295, Retrieved from the Internet: URL:http://www.3gpp.org/ftp/tsg_ran/WG2_RL 2/TSGR2_82/Docs/ [retrieved on 2013-05-24]

## Description

### TECHNICAL FIELD

The present invention relates to the field of network communications technologies, and in particular, to a service offloading method and a base station.

### BACKGROUND

The 3rd Generation Partnership Project (3GPP, the 3rd Generation Partnership Project) networks such as a second-generation mobile phone telecommunications technology (2G, 2rd-generation)/third-generation mobile telecommunications technology (3G, 3rd-generation) network and a Long Term Evolution (LTE, Long Term Evolution) network have very good signal coverage and high network mobility, and therefore provide good user experience.

However, with a sharp rise in global data communications, networks such as the 2G/3G network and the LTE network necessarily bear increasingly large data communication load. With the continuous development of communications technologies, wireless local area networks (WLAN, Wireless Local Area Networks) are increasingly applied in networks. The WLAN complements a mobile network very well with low mobility and a high data transmission rate and the WLAN network can achieve an increasingly large data throughput. Compared with the network such as the 2G/3G/LTE, network construction of the WLAN network is simple and costs less, and a data service used by a user, for example, Internet surfing, does not need assurance of especially high service quality. Therefore, data traffic transmitted in a network may be selectively offloaded to the 2G/3G/LTE or offloaded to the WLAN network, thereby preventing massive service data from being reported to the network and from causing a network bottleneck. In the prior art, an access network discovery and selection function (ANDSF, access network discovery and selection function) network element is additionally set in the network, and the ANDSF network element provides a mode of selecting an access network for user equipment, so that effective offloading of network access can be effectively implemented.

However, in a process of performing research and practice on the prior art, the inventor finds that in the prior art, the ANDSF network element is incapable of performing offloading according to load information of a radio access network (RAN, Radio Access Network) side, and as a result, a large amount of information is offloaded to a same access network, leading to occurrence of phenomena of network load excess and network load imbalance.

*"3^{rd} Generation Partnership Project; Technical Specification Group Radio Access Network; Study on WLAN*/*3GPP Radio Interworking (Release* 12)", 3GPP Draft, R2-132240_021_FS_ULTRA_LTE_WLAN_INTERW" proposes different solutions for access network selections and traffic steering.

### SUMMARY

In view of the foregoing defects of the prior art, the present invention provides a service offloading method and a base station, so that a service can be offloaded to a WLAN network or a 3GPP network with reference to network load information, and occurrence of phenomena of network load excess and network load imbalance can be reduced.

A service offloading method includes:
acquiring, by a base station, preset access network discovery and selection function ANDSF policy information, load information of an access point AP of a wireless local area network, and service information of user equipment UE including a source IP, a source port, a destination IP, a destination port, a protocol type, and service type information of the UE;
determining, by the base station according to the preset ANDSF policy information, an offloading decision corresponding to a combination of the load information of the AP, the service information of the UE, and load information, which is recorded in the base station, of a 3GPP network, wherein the ANDSF policy information comprises a correspondence between a possible combination of the load information of the AP, the service information of the UE, and the load information, which is recorded in the base station of the 3GPP network, and the offloading decision; and
delivering, by the base station, the offloading decision to the UE, so that the UE offloads a service to the 3GPP network or the wireless local area network WLAN according to the offloading decision.

A base station includes:
an acquiring unit, configured to acquire preset ANDSF policy information, load information of an AP, and service information of UE including a source IP, a source port, a destination IP, a destination port, a protocol type, and service type information of the UE;
a determining unit, configured to determine, according to the preset ANDSF policy information, an offloading decision corresponding to a combination of the load
   information of the AP, the service information of the UE, and load information, which is recorded in the base station, of a 3GPP network, wherein the ANDSF policy information comprises a correspondence between a possible combination of the load information of the AP, the service information of the UE, and the load information, which is recorded in the base station of the 3GPP network, and the offloading decision; and
a delivery unit, configured to deliver the offloading decision determined by the determining unit to the UE, so that the UE offloads a service to the 3GPP network or a WLAN according to the offloading decision.

It can be seen from the foregoing technical solutions that the embodiments of the present invention have the following advantages:
In the service offloading method and the base station that are provided in the present invention, a base station is used to acquire a preset ANDSF policy, load information of an AP, and service information of UE; then determine an offloading decision according to the preset ANDSF policy, the load information of the AP, the service type information of the UE, and load information, which is recorded in the base station, of a 3GPP network, and deliver the offloading decision to the UE, so that the UE offloads the service to the 3GPP network or a WLAN according to the offloading decision and a technical defect in the prior art that a service currently used by UE cannot be offloaded according to a load status of a network side can be overcome. With the offloading method, an optimal network for offloading can be selected according to load information of all networks for a service performed on UE, occurrence of phenomena of network load imbalance can be reduced, and service experience of a user is improved.

### BRIEF DESCRIPTION OF DRAWINGS

FIG. 1 is a flowchart of a method according to Embodiment 1 of the present invention;
FIG. 2 is a flowchart of a method according to Embodiment 2 of the present invention;
FIG. 3 is a signaling diagram of a method according to Embodiment 3 of the present invention;
FIG. 4 is a signaling diagram of a method according to Embodiment 4 of the present invention;
FIG. 5 is a signaling diagram of a method according to Embodiment 5 of the present invention;
FIG. 6 is a signaling diagram of a method according to Embodiment 6 of the present invention;
FIG. 7 is a schematic structural diagram of a base station according to Embodiment 7 of the present invention;
FIG. 8 is another schematic diagram of an apparatus according to Embodiment 7 of the present invention;
FIG. 9 is another schematic structural diagram of a base station according to Embodiment 7 of the present invention; and
FIG. 10 is a schematic diagram of an apparatus according to Embodiment 8 of the present invention.

### DESCRIPTION OF EMBODIMENTS

Embodiments of the present invention provide a service offloading method and a base station, so that a service can be offloaded to a WLAN network or a 3GPP network with reference to network load information, and occurrence of phenomena of network load excess and network load imbalance can be reduced.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person skilled in the art based on the embodiments of the present invention shall fall within the protection scope of the present invention.

### Embodiment 1

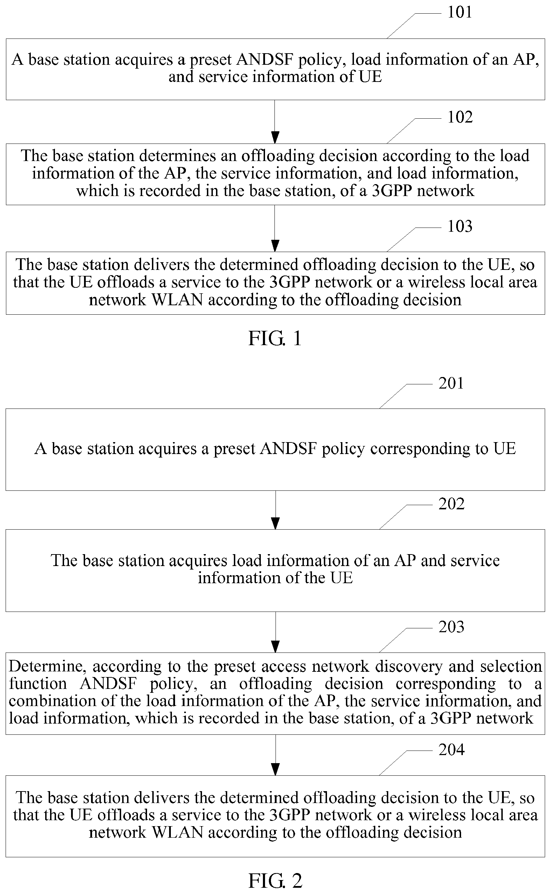

Referring to FIG. 1, FIG. 1 is a flowchart of a method according to Embodiment 1 of the present invention. As shown in FIG. 1, a service offloading method may include steps:
101: A base station acquires a preset ANDSF policy, load information of an AP, and service information of UE.
102: The base station determines an offloading decision according to the load information of the AP, the service information, and the preset ANDSF policy that are obtained in step 101, and load information, which is recorded in the base station, of a 3GPP network.

The preset ANDSF policy may be stored in an ANDSF network element and, when the base station needs to determine the offloading decision, be delivered to the base station by the ANDSF network element. A delivery manner may be: The ANDSF network element acquires location information of the UE through an S 14 interface or by using a PGW, then determines, according to the location information of the UE, a base station in which the UE is located, and sends the preset ANDSF policy corresponding to the UE to the base station.

The service information of the UE refers to a data service currently performed by the UE, and specifically includes description of a quintuple: a source IP, a source port, a destination IP, a destination port, and a protocol type; and service type information of the UE, where the service type information of the UE may include audio, video, game, web page browse, and the like. The service information may be obtained by performing deep packet inspection by the base station, or may be obtained from a mark attached on a data packet received from the PGW.

Step 102 may be specifically: determining, according to the preset ANDSF policy, the offloading decision corresponding to a combination of the load information of the AP, the service information, and the load information, which is recorded in the base station, of the 3GPP network.

It is worth pointing out that the ANDSF policy includes a correspondence between a possible combination of the load information of the AP, the service information, and the load information, which is recorded in the base station, of the 3GPP network, and the offloading decision.

103: The base station delivers the offloading decision to the UE, so that the UE offloads a service to the 3GPP network or a wireless local area network WLAN according to the offloading decision.

In the service offloading method provided in Embodiment 1 of the present invention, a base station is used to acquire a preset ANDSF policy, load information of an AP, and service information of UE; then determine an offloading decision according to the preset ANDSF policy, the load information of the AP, the service information of the UE, and load information, which is recorded in the base station, of a 3GPP network, and deliver the offloading decision to the UE, so that the UE offloads the service to the 3GPP network or a WLAN according to the offloading decision and a technical defect in the prior art that a service currently used by UE cannot be offloaded according to a load status of a network side can be overcome. With the offloading method, an optimal network for offloading can be selected according to load information of all networks for a service performed on UE, occurrence of phenomena of network load imbalance can be reduced, and service experience of a user is improved.

### Embodiment 2

Referring to FIG. 2, FIG. 2 is a flowchart of a method according to Embodiment 2 of the present invention. As shown in FIG. 2, a service offloading method may include steps:
201: A base station acquires a preset ANDSF policy corresponding to the UE.

The base station in this embodiment of the present invention may be a network entity such as an RNC or an ENB.

It is worth pointing out that the preset ANDSF policy may be directly delivered by an ANDSF network element according to location information of the UE to the base station corresponding to the location information, or may be sent to the base station by using an MME or an SGSN.

In step 201 in this embodiment, the acquiring the preset ANDSF policy corresponding to the UE may be specifically:
acquiring, by the base station, the preset ANDSF policy corresponding to the UE and sent by the ANDSF network element; or
acquiring, by the base station, an initial context setup message delivered by the mobility management entity MME or a radio bearer setup message delivered by the serving packet radio service technology support node SGSN, where both the initial context setup message and the radio bearer setup message carry the preset ANDSF policy corresponding to the UE. The MME/SGSN may acquire the ANDSF policy from the ANDSF network element, or the MME/SGSN acquires the ANDSF policy from a home subscriber management server (HSS, home subscriber management server). It can be understood that the ANDSF policy may be pre-configured in the HSS or the ANDSF network element.

202: The base station acquires load information of an AP and service information of the UE.

The acquiring, by the base station, load information of an AP may be specifically: acquiring, by the base station, the load information of the AP reported by an AP controller (AC, AP controller).

203: Determine, according to the preset ANDSF policy, an offloading decision corresponding to a combination of the load information of the AP, the service information, and load information, which is recorded in the base station, of a 3GPP network.

It should be noted that the ANDSF policy includes a correspondence between a possible combination of the load information of the AP, the service information, and the load information, which is recorded in the base station, of the 3GPP network, and the offloading decision.

In steps 201 and 202 in this embodiment, after acquiring load information of a current AP, service information of a service currently used by the UE, and the load information, which is recorded in the base station, of the 3GPP network, the base station can determine an offloading policy according to the preset ANDSF policy, that is, determine that the service currently used by the UE is offloaded to the 3GPP network or a wireless local area network WLAN.

204: The base station delivers the offloading decision determined in step 203 to the UE, so that the UE offloads a service to the 3GPP network or a wireless local area network WLAN according to the offloading decision.

Step 204 in this embodiment may be specifically: sending, by the base station, Radio Resource Control protocol RRC signaling to the UE, where the RRC signaling carries the offloading decision; or
sending, by the base station, a notification message to the ANDSF network element, where the notification message carries the offloading decision, so that the ANDSF network element forwards the offloading decision to the UE through an S 14 interface.

In the service offloading method provided in Embodiment 2 of the present invention, a base station is used to acquire a preset ANDSF policy, load information of an AP, and service information of UE; then determine an offloading decision according to the preset ANDSF policy, the load information of the AP, the service information of the UE, and load information, which is recorded in the base station, of a 3GPP network, and deliver the offloading decision to the UE, so that the UE offloads the service to the 3GPP network or a WLAN according to the offloading decision and a technical defect in the prior art that a service currently used by UE cannot be offloaded according to a load status of a network side can be overcome. With the offloading method, an optimal network for offloading can be selected according to load information of all networks for a service performed on UE, occurrence of phenomena of network load imbalance can be reduced, and service experience of a user is improved.

Embodiment 3 to Embodiment 6 of the present invention are specific scenario examples of the service offloading method provided in the present invention.

### Embodiment 3

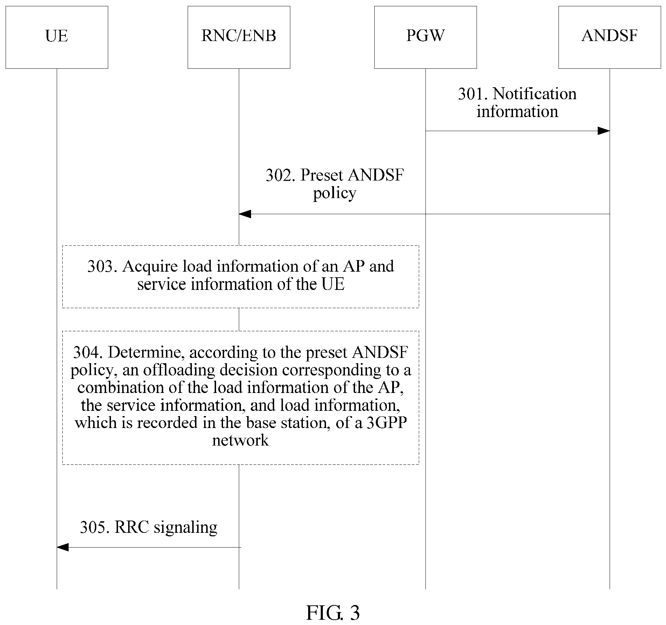

Referring to FIG. 3, FIG. 3 is a signaling diagram of a method according to Embodiment 3 of the present invention. As shown in FIG. 3, a service offloading method may include steps:
301: A PGW sends notification information to an ANDSF network element, where the notification information carries location information of UE.

In step 301 in this embodiment, the location information of the UE may also be delivered to the ANDSF network element in the following manner: directly sending, by the UE, the location information of the UE to the ANDSF network element through an S 14 interface, and no specific limitation is imposed thereto in this embodiment of the present invention.

302: The ANDSF network element delivers a preset ANDSF policy to a base station in which the UE is located.

Steps 301 to 302 may be summarized as: acquiring, by the base station, the preset ANDSF policy corresponding to the UE.

303: The base station acquires load information of an AP and service information of the UE.

304: Determine, according to the preset ANDSF policy, an offloading decision corresponding to a combination of the load information of the AP, the service information, and load information, which is recorded in the base station, of a 3GPP network.

For steps 302 to 304, reference may be made to steps 201 to 203 in Embodiment 2, and details are not described again in this embodiment of the present invention.

305: The base station sends RRC signaling to the UE, where the RRC signaling carries the offloading decision.

The base station transfers, to the UE, the RRC signaling carrying the offloading decision, so that the UE offloads a service to the 3GPP network or a wireless local area network WLAN according to the offloading decision.

In the service offloading method provided in Embodiment 3 of the present invention, a base station is used to acquire a preset ANDSF policy, load information of an AP, and service information of UE; then determine an offloading decision according to the preset ANDSF policy, the load information of the AP, the service information of the UE, and load information, which is recorded in the base station, of a 3GPP network, and deliver the offloading decision to the UE, so that the UE offloads the service to the 3GPP network or a WLAN according to the offloading decision and a technical defect in the prior art that a service currently used by UE cannot be offloaded according to a load status of a network side can be overcome. With the offloading method, an optimal network for offloading can be selected according to load information of all networks for a service performed on UE, occurrence of phenomena of network load imbalance can be reduced, and service experience of a user is improved.

### Embodiment 4

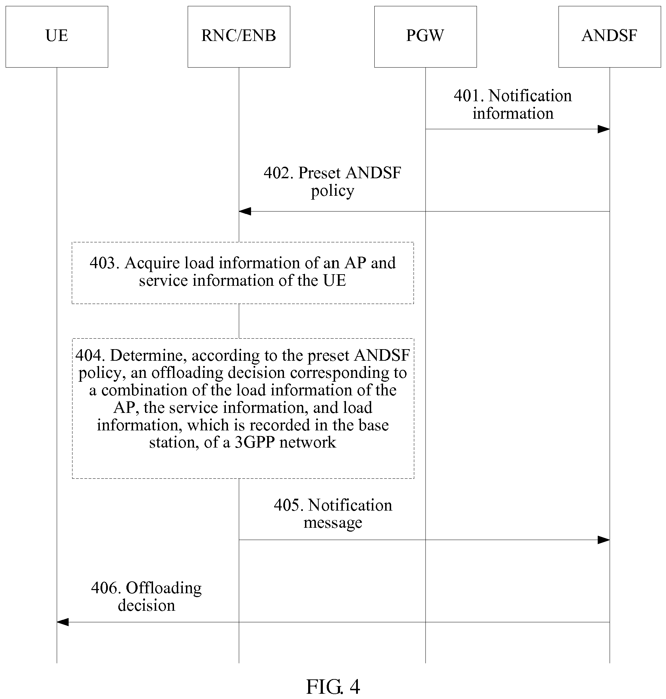

Referring to FIG. 4, FIG. 4 is a signaling diagram of a method according to Embodiment 4 of the present invention. As shown in FIG. 4, a service offloading method may include steps:
A service offloading method may include steps:
   401: A PGW sends notification information to an ANDSF network element, where the notification information carries location information of UE.

In step 401 in this embodiment, the location information of the UE may also be directly sent to the ANDSF network element through an S14 interface, and no specific limitation is imposed thereto in this embodiment of the present invention.

402: The ANDSF network element delivers a preset ANDSF policy to a base station in which the UE is located.

Steps 401 to 402 may be summarized as: acquiring, by the base station, the preset ANDSF policy corresponding to the UE.

403: The base station acquires load information of an AP and service information reported by the UE.

404: Determine, according to the preset ANDSF policy, an offloading decision corresponding to a combination of the load information of the AP, the service information, and load information, which is recorded in the base station, of a 3GPP network.

For steps 402 to 404, reference may be made to steps 201 to 203 in Embodiment 2, and details are not described again in this embodiment of the present invention.

405: The base station sends a notification message to the ANDSF network element, where the notification message carries the offloading decision.

406: The ANDSF network element forwards the offloading decision to the UE through an S14 interface.

After receiving the offloading decision, the UE offloads a service to the 3GPP network or a wireless local area network WLAN according to the offloading decision.

In the service offloading method provided in Embodiment 4 of the present invention, a base station is used to acquire a preset ANDSF policy, load information of an AP, and service information of UE; then determine an offloading decision according to the preset ANDSF policy, the load information of the AP, the service information reported by the UE, and load information, which is recorded in the base station, of a 3GPP network, and deliver the offloading decision to the UE, so that the UE offloads the service to the 3GPP network or a WLAN according to the offloading decision and a technical defect in the prior art that a service currently used by UE cannot be offloaded according to a load status of a network side can be overcome. With the offloading method, an optimal network for offloading can be selected according to load information of all networks for a service performed on UE, occurrence of phenomena of network load imbalance can be reduced, and service experience of a user is improved.

### Embodiment 5

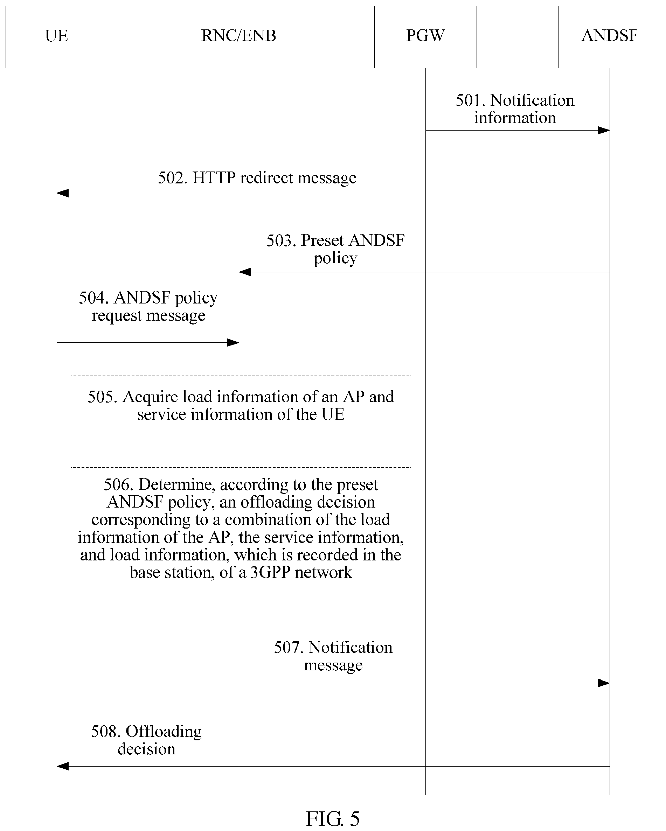

Referring to FIG. 5, FIG. 5 is a signaling diagram of a method according to Embodiment 5 of the present invention. As shown in FIG. 5, a service offloading method may include steps:
A service offloading method may include steps:
   501: A PGW sends notification information to an ANDSF network element, where the notification information carries location information of UE.

In step 501 in this embodiment, the location information of the UE may also be directly sent to the ANDSF network element through an S14 interface, and no specific limitation is imposed thereto in this embodiment of the present invention.

502: The ANDSF network element sends a Hypertext Transfer Protocol (HTTP, Hypertext transfer protocol) redirect message to the UE, where the HTTP redirect message includes a universal resource identifier (URI, Universal Resource Identifier) pointing to a base station.

503: The ANDSF network element delivers a preset ANDSF policy to the base station.

504: The UE resends an ANDSF policy request message to the base station according to the HTTP redirect message.

505: The base station acquires load information of an AP and service information of the UE.

506: The base station determines, according to the preset ANDSF policy, an offloading decision corresponding to a combination of the load information of the AP, the service information, and load information, which is recorded in the base station, of a 3GPP network.

507: The base station sends a notification message to the ANDSF network element, where the notification message carries the offloading decision.

508: The ANDSF network element forwards the offloading decision to the UE through an S14 interface.

In the service offloading method provided in Embodiment 5 of the present invention, a base station is used to acquire a preset ANDSF policy, load information of an AP, and service information of UE; then determine an offloading decision according to the preset ANDSF policy, the load information of the AP, the service information reported by the UE, and load information, which is recorded in the base station, of a 3GPP network, and deliver the offloading decision to the UE, so that the UE offloads the service to the 3GPP network or a WLAN according to the offloading decision and a technical defect in the prior art that a service currently used by UE cannot be offloaded according to a load status of a network side can be overcome. With the offloading method, an optimal network for offloading can be selected according to load information of all networks for a service performed on UE, occurrence of phenomena of network load imbalance can be reduced, and service experience of a user is improved.

### Embodiment 6

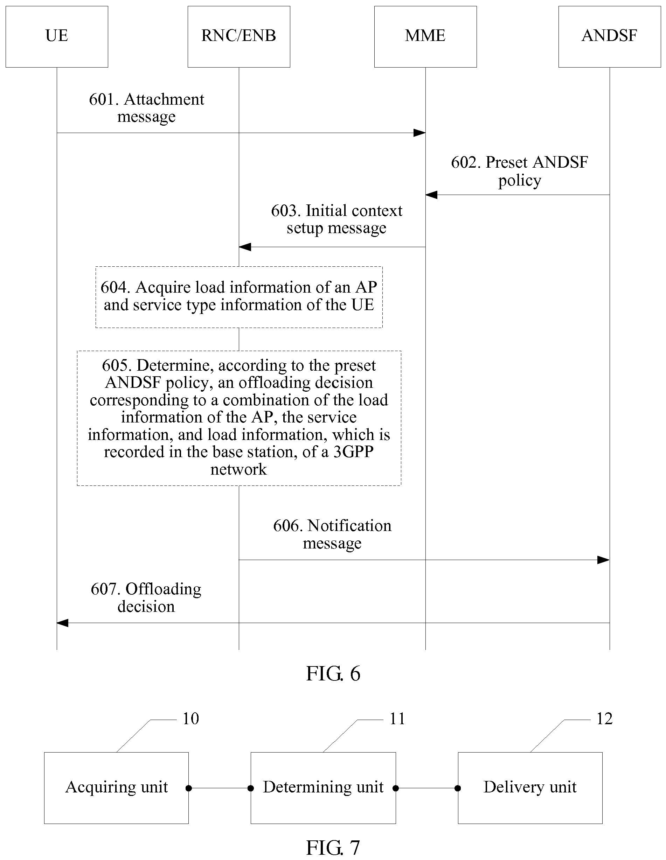

Referring to FIG. 6, FIG. 6 is a signaling diagram of a method according to Embodiment 6 of the present invention. As shown in FIG. 6, a service offloading method may include steps:
A service data offloading method may include steps:
   601: UE sends an attachment message to an MME.

The UE makes a registration in a network by sending the attachment message.

602: The MME acquires a preset ANDSF policy corresponding to the UE from an ANDSF network element.

603: The MME sends an initial context setup message to a base station, where the initial context setup message carries the preset ANDSF policy.

604: The base station acquires load information of an AP and service information of the UE.

605: Determine, according to the preset ANDSF policy, an offloading decision corresponding to a combination of the load information of the AP, the service information, and load information, which is recorded in the base station, of a 3GPP network.

606: The base station sends a notification message to the ANDSF network element, where the notification message carries the offloading decision.

607: The ANDSF network element forwards the offloading decision to the UE through an S 14 interface.

In the service offloading method provided in Embodiment 6 of the present invention, a base station is used to acquire a preset ANDSF policy, load information of an AP, and service information of UE; then determine an offloading decision according to the preset ANDSF policy, the load information of the AP, the service information reported by the UE, and load information, which is recorded in the base station, of a 3GPP network, and deliver the offloading decision to the UE, so that the UE offloads the service to the 3GPP network or a WLAN according to the offloading decision and a technical defect in the prior art that a service currently used by UE cannot be offloaded according to a load status of a network side can be overcome. With the offloading method, an optimal network for offloading can be selected according to load information of all networks for a service performed on UE, occurrence of phenomena of network load imbalance can be reduced, and service experience of a user is improved.

### Embodiment 7

Referring to FIG. 7, FIG. 7 is a schematic structural diagram of a base station according to Embodiment 7 of the present invention. As shown in FIG. 7,
a base station may include:
   an acquiring unit 10, configured to acquire a preset ANDSF policy, load information of an AP, and service information of UE;
   a determining unit 11, configured to determine an offloading decision according to the preset ANDSF policy, the load information of the AP, and the service information of the UE that are acquired by the acquiring unit 10, and load information, which is recorded in the base station, of a 3GPP network; and
   a delivery unit 12, configured to deliver the offloading decision determined by the determining unit 11 to the UE, so that the UE offloads a service to the 3GPP network or a WLAN according to the offloading decision.

In an embodiment, the determining unit 11 may be specifically configured to:
determine, according to the preset ANDSF policy, the offloading decision corresponding to a combination of the load information of the AP, the service information of the UE, and the load information, which is recorded in the base station, of the 3GPP network, where the ANDSF policy includes a correspondence between a possible combination of the load information of the AP, the service information of the UE, and the load information, which is recorded in the base station, of the 3GPP network, and the offloading decision.

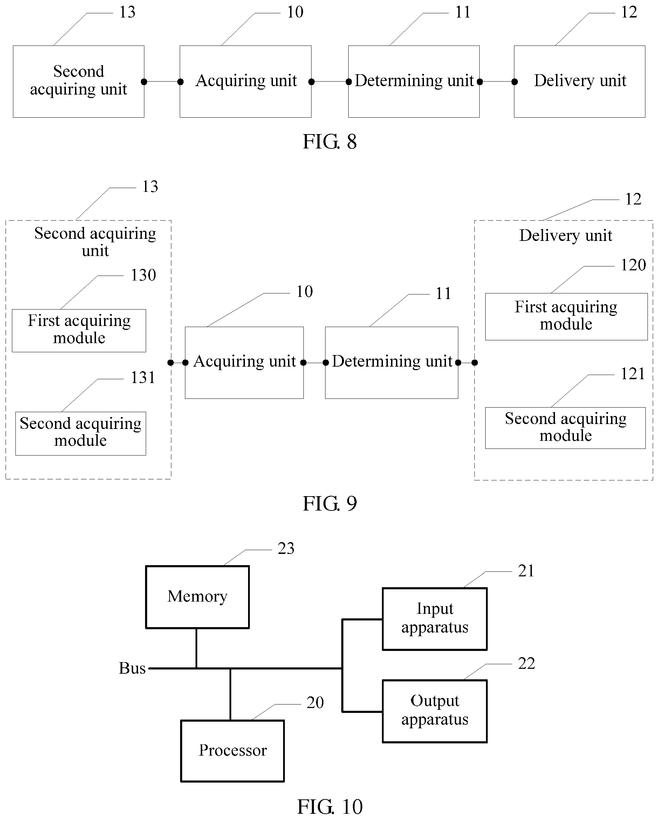

In an embodiment, also referring to FIG. 8, FIG. 8 is another schematic diagram of an apparatus according to Embodiment 7 of the present invention. The apparatus is an optimization of the apparatus shown in FIG. 7. As shown in FIG. 8, a base station may further include:
a second acquiring unit 13, configured to acquire the preset ANDSF policy corresponding to the UE according to location information of the UE.

In an embodiment, referring to FIG. 9, FIG. 9 is another schematic structural diagram of a base station according to Embodiment 7 of the present invention. As shown in FIG. 9, a second acquiring unit 13 includes:
a first acquiring module 130, configured to acquire the preset ANDSF policy corresponding to the UE and sent by an ANDSF network element; or
a second acquiring module 131, configured to acquire an initial context setup message delivered by a mobility management entity MME or a radio bearer setup message delivered by a serving packet radio service technology support node SGSN, where both the initial context setup message and the radio bearer setup message carry the preset ANDSF policy corresponding to the UE and acquired from an ANDSF network element.

In an embodiment, the delivery unit 12 includes: a first sending module 120, configured to send RRC signaling to the UE, where the RRC signaling carries the offloading decision;
or
a second sending module 121, configured to send a notification message to an ANDSF network element, where the notification message carries the offloading decision, so that the ANDSF network element forwards the offloading decision to the UE through an S 14 interface.

The base station provided in Embodiment 7 of the present invention acquires a preset ANDSF policy, load information of an AP, and service information reported by UE; then determines an offloading decision according to the preset ANDSF policy, the load information of the AP, the service information reported by the UE, and load information, which is recorded in the base station, of a 3GPP network, and delivers the offloading decision to the UE, so that the UE offloads the service to the 3GPP network or a WLAN according to the offloading decision and a technical defect in the prior art that a service currently used by UE cannot be offloaded according to a load status of a network side can be overcome. With an offloading method for the base station, an optimal network for offloading can be selected according to load information of all networks for a service performed on UE, occurrence of phenomena of network load imbalance can be reduced, and service experience of a user is improved.

### Embodiment 8

Referring to FIG. 10, FIG. 10 is a schematic diagram of an apparatus according to Embodiment 8 of the present invention. As shown in FIG. 10, a base station may include:
at least one processor 20, an input apparatus 21, an output apparatus 22, and a memory 23. In this embodiment of the present invention, the processor 20, the input apparatus 21, the output apparatus 22, and the memory 23 may be connected by using a bus or in another manner. In FIG. 10, connection by using a bus is used as an example.

The processor 20 may perform the following steps: acquiring preset access network discovery and selection function ANDSF policy information, load information of an access point AP of a wireless local area network, and service information of user equipment UE; determining an offloading decision according to the load information of the AP, the service information of the UE, the preset ANDSF policy information, and load information, which is recorded in the base station, of a 3GPP network; and delivering the offloading decision to the UE, so that the UE offloads a service to the 3GPP network or the wireless local area network WLAN according to the offloading decision.

In an embodiment of the present invention, when determining the offloading decision according to the load information of the AP, the service information of the UE, the preset ANDSF policy information, and the load information, which is recorded in the base station, of the 3GPP network, the processor 20 may specifically: determine, according to the preset ANDSF policy, the offloading decision corresponding to a combination of the load information of the AP, the service information of the UE, and the load information, which is recorded in the base station, of the 3GPP network, where the ANDSF policy includes a correspondence between a possible combination of the load information of the AP, the service information of the UE, and the load information, which is recorded in the base station, of the 3GPP network, and the offloading decision.

In an embodiment of the present invention, when acquiring the preset access network discovery and selection function ANDSF policy information, the processor 20 may specifically: acquire the preset ANDSF policy corresponding to the UE.

In an embodiment of the present invention, when acquiring the preset ANDSF policy corresponding to the UE, the processor 20 may specifically: acquire the preset ANDSF policy corresponding to the UE and sent by an ANDSF network element; or acquire an initial context setup message delivered by a mobility management entity MME or a radio bearer setup message delivered by a serving packet radio service technology support node SGSN, where both the initial context setup message and the radio bearer setup message carry the preset ANDSF policy corresponding to the UE and acquired from an ANDSF network element.

The base station provided in Embodiment 8 of the present invention acquires a preset ANDSF policy, load information of an AP, and service information of UE; then determines an offloading decision according to the preset ANDSF policy, the load information of the AP, the service information reported by the UE, and load information, which is recorded in the base station, of a 3GPP network, and delivers the offloading decision to the UE, so that the UE offloads the service to the 3GPP network or a WLAN according to the offloading decision and a technical defect in the prior art that a service currently used by UE cannot be offloaded according to a load status of a network side can be overcome. With an offloading method for the base station, an optimal network for offloading can be selected according to load information of all networks for a service performed on UE, occurrence of phenomena of network load imbalance can be reduced, and service experience of a user is improved.

A person of ordinary skill in the art may understand that all or some of the steps of the methods in the embodiments may be implemented by a program instructing relevant hardware. The program may be stored in a computer readable storage medium. The storage medium may include: a read-only memory, a magnetic disk, or an optical disc.

The above describes a service offloading method and a base station that are provided in the present invention in detail. A person of ordinary skill in the art may, based on the idea of the present invention, make modifications with respect to the specific implementation manners and the application scope. Therefore, the content of this specification shall not be construed as a limitation to the present invention.

## Claims

1. A service offloading method, comprising:
acquiring (101), by a base station,
- preset access network discovery and selection function, ANDSF, policy information,
- load information of an access point, AP, of a wireless local area network, WLAN, and
- service information of user equipment, UE including a source IP, a source port, a destination IP, a destination port, a protocol type, and service type information of the UE;
determining (102), by the base station according to the preset ANDSF policy information, an offloading decision corresponding to a combination of the load information of the AP, the service information of the UE, and load information, which is recorded in the base station of a 3rd Generation Partnership Project, 3GPP network, wherein the ANDSF policy information comprises a correspondence between a possible combination of the load information of the AP, the service information of the UE, and the load information, which is recorded in the base station of the 3GPP network, and the offloading decision; and
delivering (103), by the base station, the offloading decision to the UE, so that the UE offloads a service to the 3GPP network or the WLAN according to the offloading decision.

2. The service offloading method according to claim 1, wherein the acquiring (101), by a base station, preset access network discovery and selection function ANDSF policy information comprises:
acquiring (201), by the base station, the preset ANDSF policy information corresponding to the UE.

3. The service offloading method according to claim 2, wherein the acquiring (201), by the base station, the preset ANDSF policy information corresponding to the UE comprises:
acquiring, by the base station, the preset ANDSF policy information corresponding to the UE from an ANDSF network element.

4. The service offloading method according to claim 2, wherein the acquiring (201), by the base station, the preset ANDSF policy information corresponding to the UE comprises:
acquiring, by the base station, an initial context setup message delivered by a mobility management entity, MME, wherein the initial context setup message carries the preset ANDSF policy information corresponding to the UE and acquired from an ANDSF network element or a home subscriber management server, HSS.

5. The service offloading method according to claim 2, wherein the acquiring (201), by the base station, the preset ANDSF policy information corresponding to the UE comprises:
acquiring, by the base station, a radio bearer setup message delivered by a serving general packet radio service support node, SGSN, wherein the radio bearer setup message carries the preset ANDSF policy corresponding to the UE and acquired from an ANDSF network element or a home subscriber management server, HSS.

6. The service offloading method according to any one of claims 1 to 5, wherein the delivering (103), by the base station, the offloading decision to the UE comprises:
sending (204), by the base station, Radio Resource Control protocol, RRC, signaling to the UE, wherein the RRC signaling carries the offloading decision; or
sending, by the base station, a notification message to the ANDSF network element, wherein the notification message carries the offloading decision, so that the ANDSF network element forwards the offloading decision to the UE through an S 14 interface.

7. A base station, comprising:
an acquiring unit (10), configured to acquire
- preset access network discovery and selection function, ANDSF, policy information,
- load information of an access point, AP, of a wireless local area network, WLAN, and
- service information of user equipment, UE including a source IP, a source port, a destination IP, a destination port, a protocol type, and service type information of the UE;
a determining unit (11), configured to determine, according to the preset ANDSF policy information, an offloading decision corresponding to a combination of the load information of the AP, the service information of the UE, and load information, which is recorded in the base station, of a 3rd Generation Partnership Project, 3GPP, network, wherein the ANDSF policy information comprises a correspondence between a possible combination of the load information of the AP, the service information of the UE, and the load information, which is recorded in the base station of the 3GPP network, and the offloading decision; and
a delivery unit (12), configured to deliver the offloading decision determined by the determining unit (11) to the UE, so that the UE offloads a service to the 3GPP network or the WLAN according to the offloading decision.

8. The base station according to claim 7, further comprising:
a second acquiring unit (13), configured to acquire the preset ANDSF policy information corresponding to the UE.

9. The base station according to claim 8, wherein the second acquiring unit (13) comprises:
a first acquiring module (130), configured to acquire the preset ANDSF policy information corresponding to the UE from an ANDSF network element.

10. The base station according to claim 8, wherein the second acquiring unit (13) comprises:
a second acquiring module (131), configured to acquire an initial context setup message delivered by a mobility management entity, MME, wherein the initial context setup message carries the preset ANDSF policy information corresponding to the UE and acquired from an ANDSF network element or a home subscriber management server, HSS.

11. The base station according to claim 8, wherein the second acquiring unit (13) comprises:
a second acquiring module (131), configured to acquire a radio bearer setup message delivered by a serving general packet radio service support node, SGSN, wherein the radio bearer setup message carries the preset ANDSF policy information corresponding to the UE and acquired from an ANDSF network element or a home subscriber management server, HSS.

12. The base station according to any one of claims 6 to 11, wherein the delivery unit (12) comprises: a first sending module (120), configured to send Radio Resource Control protocol, RRC, signaling to the UE, wherein the RRC signaling carries the offloading decision.

## Patentansprüche

1. Dienstauslagerungsverfahren, das Folgendes umfasst:
Beschaffen (101), durch eine Basisstation, von
- voreingestellten "Access-Network-Discovery-and-Selection-Function"-Richtlinieninformationen (ANDSF-Richtlinieninformationen),
- Lastinformationen eines Zugangspunkts (AP) eines drahtlosen lokalen Netzwerks (WLAN) und
- Dienstinformationen von Endgeräten (User Equipment, UE), die ein Quellen-IP, einen Quellanschluss, ein Ziel-IP, einen Zielanschluss, einen Protokolltyp und Diensttypinformationen des UE enthalten;
Ermitteln (102), durch die Basisstation nach den voreingestellten ANDSF-Richtlinieninformationen, einer Auslagerungsentscheidung, die einer Kombination der Lastinformationen des AP, der Dienstinformationen des UE und Lastinformationen entspricht, die in der Basisstation eines "3rd-Generation-Partnership-Project"-Netzwerks (3GPP-Netzwerks) aufgezeichnet sind, wobei die ANDSF-Richtlinieninformationen eine Entsprechung zwischen einer möglichen Kombination der Lastinformationen des AP, der Dienstinformationen des UE und der Lastinformationen, die in der Basisstation des 3GPP-Netzwerks aufgezeichnet sind, sowie der Auslagerungsentscheidung umfassen; und
Liefern (103) der Auslagerungsentscheidung an das UE durch die Basisstation, sodass das UE einen Dienst an das 3GPP-Netzwerk oder das WLAN gemäß der Auslagerungsentscheidung auslagert.

2. Dienstauslagerungsverfahren nach Anspruch 1, wobei das Beschaffen (101) von voreingestellten "Access-Network-Discovery-and-Selection-Function"-Richtlinieninformationen (ANDSF-Richtlinieninformationen) durch eine Basisstation Folgendes umfasst:
Beschaffen (201) der dem UE entsprechenden, voreingestellten ANDSF-Richtlinieninformationen durch die Basisstation.

3. Dienstauslagerungsverfahren nach Anspruch 2, wobei das Beschaffen (201) der dem UE entsprechenden, voreingestellten ANDSF-Richtlinieninformationen durch die Basisstation Folgendes umfasst:
Beschaffen der dem UE entsprechenden, voreingestellten ANDSF-Richtlinieninformationen von einem ANDSF-Netzwerkelement durch die Basisstation.

4. Dienstauslagerungsverfahren nach Anspruch 2, wobei das Beschaffen (201) der dem UE entsprechenden, voreingestellten ANDSF-Richtlinieninformationen durch die Basisstation Folgendes umfasst:
Beschaffen einer anfänglichen, von einer "Mobility Management Entity" (MME) gelieferten Kontexteinrichtungsnachricht durch die Basisstation, wobei die anfängliche Kontexteinrichtungsnachricht die voreingestellten ANDSF-Richtlinieninformationen trägt, die dem UE entsprechen und von einem ANDSF-Netzwerkelement oder einem "Home Subscriber Management Server" (HSS) beschafft wurden.

5. Dienstauslagerungsverfahren nach Anspruch 2, wobei das Beschaffen (201) der dem UE entsprechenden, voreingestellten ANDSF-Richtlinieninformationen durch die Basisstation Folgendes umfasst:
Beschaffen einer von einem dienenden "General-Packet-Radio-Service"-Hilfsknoten (SGSN) gelieferten Radioträger-Einrichtungsnachricht durch die Basisstation, wobei die Radioträger-Einrichtungsnachricht die voreingestellten ANDSF-Richtlinieninformationen trägt, die dem UE entsprechen und von einem ANDSF-Netzwerkelement oder einem "Home Subscriber Management Server" (HSS) beschafft wurden.

6. Dienstauslagerungsverfahren nach einem der Ansprüche 1 bis 5, wobei das Liefern (103) der Auslagerungsentscheidung an das UE durch die Basisstation Folgendes umfasst:
Senden (204) von Funkressourcensteuerungsprotokollsignalgebung (RRC-Signalgebung) an das UE durch die Basisstation, wobei die RRC-Signalgebung die Auslagerungsentscheidung trägt; oder
Senden einer Benachrichtigung an das ANDSF-Netzwerkelement durch die Basisstation, wobei die Benachrichtigung die Auslagerungsentscheidung trägt, sodass das ANDSF-Netzwerkelement die Auslagerungsentscheidung über eine S14-Schnittstelle an das UE weiterleitet.

7. Basisstation, die Folgendes umfasst:
eine Beschaffungseinheit (10), die konfiguriert ist, Folgendes zu beschaffen:
- voreingestellte "Access-Network-Discovery-and-Selection-Function"-Richtlinieninformationen (ANDSF-Richtlinieninformationen),
- Lastinformationen eines Zugangspunkts (AP) eines drahtlosen lokalen Netzwerks (WLAN) und
- Dienstinformationen von Endgeräten (User Equipment, UE), die ein Quellen-IP, einen Quellanschluss, ein Ziel-IP, einen Zielanschluss, einen Protokolltyp und Diensttypinformationen des UE enthalten;
eine Ermittlungseinheit (11), die konfiguriert ist, nach den voreingestellten ANDSF-Richtlinieninformationen eine Auslagerungsentscheidung zu ermitteln, die einer Kombination der Lastinformationen des AP, der Dienstinformationen des UE und Lastinformationen entspricht, die in der Basisstation eines "3rd-Generation-Partnership-Project"-Netzwerks (3GPP-Netzwerks) aufgezeichnet sind, wobei die ANDSF-Richtlinieninformationen eine Entsprechung zwischen einer möglichen Kombination der Lastinformationen des AP, der Dienstinformationen des UE und der Lastinformationen, die in der Basisstation des 3GPP-Netzwerks aufgezeichnet sind, sowie der Auslagerungsentscheidung umfassen; und
eine Liefereinheit (12), die konfiguriert ist, die von der Ermittlungseinheit (11) ermittelte Auslagerungsentscheidung an das UE zu liefern, sodass das UE einen Dienst an das 3GPP-Netzwerk oder das WLAN gemäß der Auslagerungsentscheidung auslagert.

8. Basisstation nach Anspruch 7, die ferner Folgendes umfasst:
eine zweite Beschaffungseinheit (13), die konfiguriert ist, die dem UE entsprechenden, voreingestellten ANDSF-Richtlinieninformationen zu beschaffen.

9. Basisstation nach Anspruch 8, wobei die zweite Beschaffungseinheit (13) Folgendes umfasst:
ein erstes Beschaffungsmodul (130), das konfiguriert ist, die dem UE entsprechenden, voreingestellten ANDSF-Richtlinieninformationen von einem ANDSF-Netzwerkelement zu beschaffen.

10. Basisstation nach Anspruch 8, wobei die zweite Beschaffungseinheit (13) Folgendes umfasst:
ein zweites Beschaffungsmodul (131), das konfiguriert ist, eine anfängliche, von einer "Mobility Management Entity" (MME) gelieferte Kontexteinrichtungsnachricht zu beschaffen, wobei die anfängliche Kontexteinrichtungsnachricht die voreingestellte ANDSF-Richtlinieninformationen trägt, die dem UE entsprechen und von einem ANDSF-Netzwerkelement oder einem "Home Subscriber Management Server" (HSS) beschafft wurden.

11. Basisstation nach Anspruch 8, wobei die zweite Beschaffungseinheit (13) Folgendes umfasst:
ein zweites Beschaffungsmodul (131), das konfiguriert ist, eine von einem dienenden "General-Packet-Radio-Service"-Hilfsknoten (SGSN) gelieferte Radioträger-Einrichtungsnachricht zu beschaffen, wobei die Radioträger-Einrichtungsnachricht die voreingestellten ANDSF-Richtlinieninformationen trägt, die dem UE entsprechen und von einem ANDSF-Netzwerkelement oder einem "Home Subscriber Management Server" (HSS) beschafft wurden.

12. Basisstation nach einem der Ansprüche 6 bis 11, wobei die Liefereinheit (12) Folgendes umfasst: ein erstes Sendemodul (120), das konfiguriert ist, Funkressourcensteuerungsprotokollsignalgebung (RRC-Signalgebung) an das UE zu senden, wobei die RRC-Signalgebung die Auslagerungsentscheidung trägt.

## Revendications

1. Procédé de délestage de service, comprenant les étapes consistant à :
acquérir (101), par une station de base,
- des informations sur la politique d'une fonction de sélection et de découverte d'un réseau d'accès, ANDSF, prédéfinie,
- des informations sur le chargement d'un point d'accès, AP, d'un réseau local sans fil, WLAN, et
- des informations de service d'un équipement utilisateur, UE, comprenant une adresse IP source, un port source, une adresse IP de destination, un port de destination, un type de protocole et des informations de type service de l'UE ;
déterminer (102), par la station de base en fonction des informations sur la politique ANDSF prédéfinie, une décision de délestage correspondant à une combinaison des informations sur le chargement de l'AP, des informations de service de l'UE, et des informations sur le chargement, qui sont enregistrées dans la station de base d'un réseau de projet de partenariat de troisième génération, 3GPP, dans lequel les informations sur la politique ANDSF comprennent une correspondance entre une combinaison possible des informations sur le chargement de l'AP, des informations de service de l'UE, et des informations sur le chargement, qui sont enregistrées dans la station de base du réseau 3GPP, et la décision de délestage ; et
distribuer (103), par la station de base, la décision de délestage à l'UE, de sorte que l'UE déleste un service au réseau 3GPP ou au WLAN en fonction de la décision de délestage.

2. Procédé de délestage de service selon la revendication 1, dans lequel l'acquisition (101), par une station de base, d'informations sur la politique d'une fonction de sélection et de découverte d'un réseau d'accès, ANDSF, prédéfinie, comprend l'étape consistant à :
acquérir (201), par la station de base, les informations sur la politique ANDSF prédéfinie correspondant à l'UE.

3. Procédé de délestage de service selon la revendication 2, dans lequel l'acquisition (201), par la station de base, des informations sur la politique ANDSF prédéfinie correspondant à l'UE comprend l'étape consistant à :
acquérir, par la station de base, les informations sur la politique ANDSF prédéfinie correspondant à l'UE à partir d'un élément de réseau ANDSF.

4. Procédé de délestage de service selon la revendication 2, dans lequel l'acquisition (201), par la station de base, des informations sur la politique ANDSF prédéfinie correspondant à l'UE comprend l'étape consistant à :
acquérir, par la station de base, un message d'établissement de contexte initial délivré par une entité de gestion de mobilité, MME, dans lequel le message d'établissement de contexte initial achemine les informations sur la politique ANDSF prédéfinie correspondant à l'UE et acquise à partir d'un élément de réseau ANDSF ou d'un serveur de gestion d'abonnés domestiques, HSS.

5. Procédé de délestage de service selon la revendication 2, dans lequel l'acquisition (201), par la station de base, des informations sur la politique ANDSF prédéfinie correspondant à l'UE comprend l'étape consistant à :
acquérir, par la station de base, un message d'établissement de support radio délivré par un noeud de support de service général de paquets radio de service, SGSN, dans lequel le message d'établissement de support radio achemine la politique ANDSF prédéfinie correspondant à l'UE et acquise à partir d'un élément de réseau ANDSF ou d'un serveur de gestion d'abonnés domestiques, HSS.

6. Procédé de délestage de service selon l'une quelconque des revendications 1 à 5, dans lequel la distribution (103), par la station de base, de la décision de délestage à l'UE comprend les étapes consistant à :
envoyer (204), par la station de base, la signalisation du protocole de commande de ressources radio, RRC, à l'UE, dans lequel la signalisation RRC achemine la décision de délestage ; ou
envoyer, par la station de base, un message de notification à l'élément de réseau ANDSF, dans lequel le message de notification achemine la décision de délestage, de sorte que l'élément de réseau ANDSF transmette la décision de délestage à l'UE par le biais d'une interface S 14.

7. Station de base, comprenant :
une unité d'acquisition (10), configurée pour acquérir
- des informations sur la politique d'une fonction de sélection et de découverte d'un réseau d'accès, ANDSF, prédéfinie,
- des informations sur le chargement d'un point d'accès, AP, d'un réseau local sans fil, WLAN, et
- des informations de service d'un équipement utilisateur, UE, comprenant une adresse IP source, un port source, une adresse IP de destination, un port de destination, un type de protocole et des informations de type service de l'UE ;
une unité de détermination (11), configurée pour déterminer, en fonction des informations sur la politique ANDSF prédéfinie, une décision de délestage correspondant à une combinaison des informations sur le chargement de l'AP, des informations de service de l'UE, et des informations sur le chargement, qui sont enregistrées dans la station de base d'un réseau de projet de partenariat de troisième génération, 3GPP, dans lequel les informations sur la politique ANDSF comprennent une correspondance entre une combinaison possible des informations sur le chargement de l'AP, des informations de service de l'UE, et des informations sur le chargement, qui sont enregistrées dans la station de base du réseau 3GPP, et la décision de délestage ; et
une unité de distribution (12), configurée pour distribuer la décision de délestage déterminée par l'unité de détermination (11) à l'UE, de sorte que l'UE déleste un service au réseau 3GPP ou au WLAN en fonction de la décision de délestage.

8. Station de base selon la revendication 7, comprenant en outre :
une seconde unité d'acquisition (13), configurée pour acquérir les informations sur la politique ANDSF prédéfinie correspondant à l'UE.

9. Station de base selon la revendication 8, dans lequel la seconde unité d'acquisition (13) comprend :
un premier module d'acquisition (130), configuré pour acquérir les informations sur la politique ANDSF prédéfinie correspondant à l'UE à partir d'un élément de réseau ANDSF.

10. Station de base selon la revendication 8, dans lequel la seconde unité d'acquisition (13) comprend :
un second module d'acquisition (131), configuré pour acquérir un message d'établissement de contexte initial délivré par une entité de gestion de mobilité, MME, dans lequel le message d'établissement de contexte initial achemine les informations sur la politique ANDSF prédéfinie correspondant à l'UE et acquise à partir d'un élément de réseau ANDSF ou d'un serveur de gestion d'abonnés domestiques, HSS.

11. Station de base selon la revendication 8, dans lequel la seconde unité d'acquisition (13) comprend :
un second module d'acquisition (131), configuré pour acquérir un message d'établissement de support radio délivré par un noeud de support de service général de paquets radio de service, SGSN, dans lequel le message d'établissement de support radio achemine les informations sur la politique ANDSF prédéfinie correspondant à l'UE et acquise à partir d'un élément de réseau ANDSF ou d'un serveur de gestion d'abonnés domestiques, HSS.

12. Station de base selon l'une quelconque des revendications 6 à 11, dans lequel l'unité de distribution (12) comprend : un premier module d'envoi (120), configuré pour envoyer une signalisation du protocole de commande de ressources radio, RRC, à l'UE, dans lequel la signalisation RRC achemine la décision de délestage.
